# FASCICULE DE BREVET EUROPEEN

(11) **EP 1 340 958 B1**
(45) Date de publication et mention de la délivrance du brevet: **06.01.2010**
(21) Numéro de dépôt: 03290463.3
(22) Date de dépôt: 27.02.2003
(51) Int. Cl.: G01B 7/28, B66F 3/08, B66F 17/00

(54) **Dispositif de détection d'usure de l'écrou d'un ensemble vis-écrou**
Vorrichtung zur Messung der Abnutzung einer Schraube in einer Mutter- und Schraubenanordnung
Device for detecting wear of a screw in a screw-and-nut

(30) Priorité: 01.03.2002 FR 0202624
(43) Date de publication de la demande: 03.09.2003
(73) Titulaire: Goodrich Actuation Systems SAS, 78530 Buc (FR)
(72) Inventeur: Port-Robach, Isabelle, 95170 Deuil la Barre (FR)
(74) Mandataire: Texier, Christian

(56) Documents cités:
- SU-A- 1 490 586
- US-A- 3 687 234
- US-A- 5 755 310
- PATENT ABSTRACTS OF JAPAN vol. 1996, no. 06, 28 juin 1996 (1996-06-28) -& JP 08 029109 A (EAGLE IND CO LTD), 2 février 1996 (1996-02-02)

## Description

L'invention concerne la détection d'usure de filetage dans les ensembles vis/écrou, et notamment dans les vérins à vis.

Plus précisément, l'invention concerne une telle détection lorsqu'elle met en oeuvre un capteur électrique d'usure.

La détection d'usure de filetage est une préoccupation importante, notamment quant elle vise à alerter une limite de résistance du couple vis/écrou.

La prédiction d'une rupture éventuelle est une préoccupation particulièrement forte dans le domaine des vérins à vis, c'est à dire des systèmes dans lesquels une vis et un écrou sont entraînés en rotation relative de manière répétée pour transformer à chaque fois cette rotation en une poussée ou une traction mutuelle.

Plus généralement, la détection d'usure vise à signaler un fonctionnement considéré comme anormal du couple vis/écrou.

Dans le document SU 1 490 586, il a été décrit une sonde placée dans un anneau de même diamètre que l'écrou, rendu solidaire à ce dernier en position coaxiale, cet anneau venant également en appui contre le filetage de la vis, de manière à être lui-même sujet à usure.

La sonde électrique réagissant au contact avec la vis est noyée dans cet anneau pour affleurer au niveau de la zone d'usure de ce dernier. Une usure trop importante de l'anneau est considérée comme signalant la nécessité d'une intervention de maintenance.

Ce système reste toutefois insatisfaisant, car l'anneau est complexe à réaliser et fastidieux à positionner.

De plus, il présente une fiabilité de mesure qui est insuffisante.

Le but de l'invention est donc de résoudre ces inconvénients.

On connait déjà par JP 08029109 un vérin à vis selon le préambule de la revendication 1.

L'invention propose quant à elle d'atteindre le but précité grâce à un vérin à vis selon la revendication 1.

L'invention propose également un vérin à vis, incluant un tel ensemble vis-écrou.

On propose en outre, selon l'invention, un vérin à vis du type incluant une vis, un écrou primaire transmettant l'effort du vérin en fonctionnement normal, et un écrou secondaire intervenant pour reprendre l'effort du vérin lorsque l'écrou primaire est défectueux, le couple formé de la vis et de l'écrou secondaire étant conforme à celui mentionné ci-dessus.

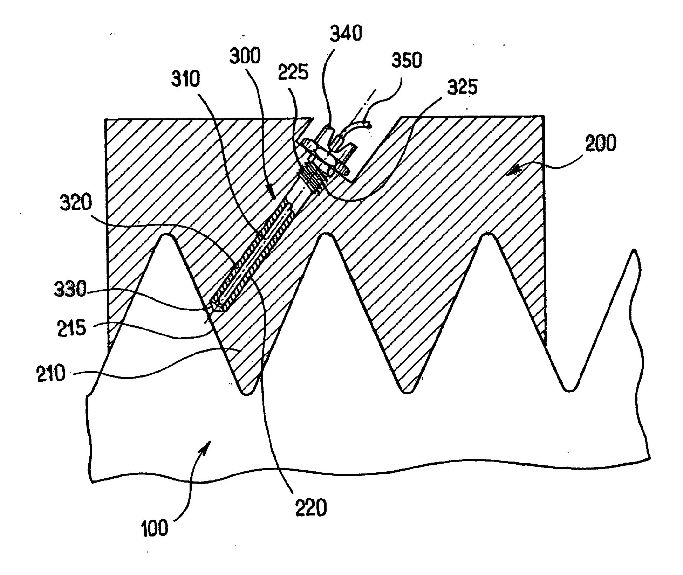

D'autres caractéristiques, buts et avantages de l'invention apparaîtront à la lecture de la description détaillée qui va suivre, faite en référence à la figure annexée, qui est une coupe longitudinale partielle d'un ensemble vis/écrou selon l'invention.

Le couple vis/écrou représenté sur la figure annexée fait partie d'un ensemble plus large, non représenté, dont la fonction est d'entraîner selon un mouvement répétitif une charge ou un élément articulé comme par exemple un volet ou un aileron d'avion. La vis 100 est ici entraînée en rotation, générant alors une translation de l'écrou 200, écrou relié à l'organe à déplacer.

La figure annexée représente plus particulièrement une portion latérale de la vis 100 et de l'écrou 200 considérés, le reste du dispositif consistant en un montage mécanique classique.

On a en outre représenté une sonde 300 prévue pour détecter une usure de filetage, et plus particulièrement une usure du filetage de l'écrou 200. Cette sonde 300 est une sonde électrique incluant un élément conducteur 310, conçue pour détecter un simple contact entre cet élément inducteur 310 et la vis 100.

Pour cela, cette sonde 300, qui est placée à une première borne d'un générateur, est entourée d'une gaine isolante 310 et est placée à proximité de la vis de manière à ce que la gaine 310 soit elle-même sujette à usure.

Lorsque l'usure est suffisamment importante, la partie conductrice 310 de la sonde 300 vient au contact de la vis 100. La vis 100 étant reliée à une deuxième borne du générateur et le circuit ainsi fermé présentant en outre des moyens de détection de courant, une telle détection signale l'arrivée de l'élément conducteur 310 au contact de la vis 100.

La partie conductrice 310 de la sonde 300 forme un doigt rigide, la gaine 320 étant constituée par un capuchon en matière plastique de même longueur que le doigt conducteur 320.

La sonde 300 est placée au sein même de l'écrou 200.

En d'autres termes, c'est l'écrou 200 qui, outre sa fonction mécanique principale de coopération avec la vis 100, porte la sonde 300 au sein même de son matériau constitutif.

De ce fait, dans un positionnement adéquat de cette dernière, c'est le filetage même de l'écrou 200 qui est contrôlé en matière d'usure.

La sonde 300 est pour cela placée de manière à s'étendre à proximité directe d'une zone de filetage à surveiller de l'écrou 200.

Dans le présent exemple, le doigt conducteur 310 présente son extrémité sous la surface d'une nervure 210 du filetage de l'écrou.

Plus particulièrement, le doigt 310 vient, par son extrémité, dans le flanc 215 d'une nervure 210 de filetage, à proximité directe sous la surface de ce flanc 215.

La mise en contact du doigt conducteur 312 avec le filetage de la vis 100 correspond à l'élimination d'une épaisseur prédéterminée dans la nervure de filetage 210.

De plus, le doigt affleure sous le flanc de cette nervure 210, à mi-hauteur de la nervure. Une surveillance d'usure dans cette zone située à mi-hauteur de la nervure de filetage 210 s'avère particulièrement avantageuse pour indiquer l'état d'usure général de l'écrou, l'usure de cette zone représentant fidèlement l'usure générale du filetage.

On détecte ainsi une usure supérieure à un seuil que l'on détermine à l'avance par le positionnement de la pointe 330 de la sonde 300.

En pratique, dans l'exemple particulier donné ici, la pointe de sonde 330 se situe sous une surface de l'écrou 200 qui coopère mécaniquement avec la vis 100. C'est toutefois principalement la position de la pointe 330 vis à vis de la face opposée, appartenant à la vis 100, qui définit les seuils d'usure au-delà de laquelle la détection prend effet.

Selon une variante, la sonde 300 peut être conçue pour ne présenter une modification de son comportement que lorsque sa partie conductrice est elle-même usée au delà d'un certain seuil.

Pour atteindre la proximité du flanc de la nervure 210, la sonde 300 traverse l'écrou 200 depuis sa surface externe de circonférence. La sonde 300 émerge de cette surface externe sous la forme d'une tête élargie prolongée par une liaison électrique filaire 350.

La sonde 300, inscrite dans un plan radial de l'ensemble vis/écrou, est toutefois dirigée de manière oblique par rapport à l'axe principal de l'ensemble. Ainsi, la sonde 300 approche le flanc 215 de la nervure 210 d'une manière transversale au flanc.

Bien qu'ici au contact avec l'écrou 200 par toute l'étendue de sa gaine 320, la présente sonde 300 est une sonde rapportée dans un passage préformé 220 de l'écrou. Ce dernier passage porte un filetage interne 225 complémentaire d'un filetage 325 prévu sur la gaine, pour une fixation de la sonde par vissage.

La tête 350 de la sonde 300 forme en outre le périmètre octogonal pour vissage par des outils classiques.

On a avantageusement prévu ici une réservation dans la surface externe de l'écrou 200 permettant à la tête de sonde 340 d'y rester effacée.

L'invention présente un avantage particulier dans le cas d'un dispositif dont la sécurité de fonctionnement est particulièrement surveillée, par exemples les vérins à vis dans lesquels on prévoit deux écrous, un écrou primaire étant chargé normalement, et un écrou secondaire, non chargé en fonctionnement normal, n'est soumis à effort qu'en cas de dégradation de l'écrou primaire (système « fail safe »).

La surveillance d'usure d'écrou selon l'invention est mise en oeuvre avantageusement pour la surveillance de l'écrou secondaire.

L'écrou secondaire, qu'il soit chargé ou non chargé (stand-by) peut ainsi être garanti quant à son bon fonctionnement ce qui apporte un niveau de sécurité supplémentaire à l'ensemble.

## Revendications

1. Vérin à vis incluant un ensemble vis-écrou (100, 200), l'écrou étant muni d'une surface (215) au contact du filetage de la vis (100) et recevant un organe électrique sensible (300) à une interaction mécanique avec le filetage de la vis (100), cet organe sensible (300) étant placé dans l'écrou (200) à proximité de ladite surface pour interagir avec le filetage de ladite vis en cas d'usure de cette surface (215), ledit organe sensible (300) étant une sonde qui présente une gaine externe (320) et qui est disposé dans un passage préformé (220) de l'écrou, **caractérisé en ce que** la gaine externe (300) de la sonde présente un filetage (325) apte à coopérer avec un filetage interne complémentaire (225) que présente le passage préformé de l'écrou, lesdits filetages (225, 325) assurant ainsi la fixation de l'organe sensible (300) par vissage sur ledit écrou.

2. Vérin à vis selon la revendication 1, **caractérisé en ce que** l'organe sensible (300) se termine par une tête élargie (340) qui émerge de l'écrou au niveau d'une réservation ménagée dans la surface externe dudit écrou et qui permet à ladite tête (340) d' y rester effacée.

3. Vérin à vis selon la revendication 1, **caractérisé en ce que** l'organe sensible (300) est noyée dans une nervure du filetage (210) de l'écrou.

4. Vérin à vis selon l'une quelconque des revendications précédentes, **caractérisé en ce que** l'organe sensible (300) est placé à proximité d'une surface (215) formant le flanc (215) d'une nervure (210) du filetage de l'écrou (200), de manière à venir au contact du filetage de la vis (100), en cas d'usure du filetage de l'écrou (200), à travers le flanc (215) de la nervure (210) du filetage de l'écrou (200).

5. Vérin à vis selon la revendication 4, **caractérisé en ce que** l'organe sensible (300) occupe une zone du flanc (215) situé sensiblement à mi-hauteur de la nervure (210) de filetage, de manière à venir au contact du filetage de la vis (100), en cas d'usure du filetage de l'écrou (200), à travers cette zone du flanc (215) situé à mi-hauteur.

6. Vérin à vis selon l'une quelconque des revendications précédentes, **caractérisé en ce que** l'organe sensible (300) inclut un doigt rigide conducteur (310) qui s'étend à travers l'écrou (200) depuis une zone (215) située à proximité de la surface susceptible d'usure de l'écrou (200), jusqu'à une zone où il émerge de l'écrou de sorte que ce doigt rigide (310) peut être alimenté électriquement par sa partie émergeant de l'écrou (200).

7. Vérin à vis selon les revendications 4 et 6 en combinaison, **caractérisé en ce que** le doigt rigide (310) s'étend dans une direction telle qu'il approche le flanc (215) de la nervure (210) selon une direction sensiblement transversale à ce flanc (215).

8. Vérin à vis selon la revendication 6 ou la revendication 7, **caractérisé en ce que** l'écrou (200) est muni d'un passage (220) de réception du doigt (310), passage (220) qui est préformé avant réception du doigt (310), le doigt (310) et le passage étant équipés de filetages complémentaires (225, 325).

9. Vérin à vis selon l'une quelconque des revendications précédentes, **caractérisé en ce que** l'organe sensible (300) est constitué d'un élément conducteur (310) entouré par une gaine isolante (320), de sorte que l'élément conducteur (310) entre en contact électrique avec la vis (100) seulement lorsque la gaine isolante (320) est suffisamment entamée par usure contre la vis (100).

10. Vérin à vis selon la revendication précédente, **caractérisé en ce qu'**il inclut des moyens pour détecter la mise en conduction électrique de l'élément conducteur (310) avec la vis (100).

11. Vérin à vis selon l'une quelconque des revendications précédentes, **caractérisé en ce qu'**il est du type incluant une vis, un écrou primaire transmettant l'effort du vérin en fonctionnement normal, et un écrou secondaire (200) intervenant pour reprendre l'effort du vérin lorsque l'écrou primaire est défectueux, l'organe sensible étant placé dans l'écrou secondaire.

## Claims

1. A screw actuator comprising a screw-and-nut assembly (100, 200), said nut being provided with a surface (215) in contact with the thread of the screw (100), and receiving an electrical sensing member (300) responsive to mechanical interaction with the thread of the screw (100), the sensing member (300) being placed in the nut (200) close to said surface to interact with the thread of said screw in the event of said surface (215) wearing, said sensing member (300) being a probe presenting an outside sheath (320) and being disposed in a preformed passage (220) of the nut, said screw-and-nut assembly being **characterized in that** the outside sheath (320) of the probe presents a thread (325) suitable for cooperating with a complementary inside thread (225) presented in the preformed passage of the nut, said threads (225, 325) thus ensuring the fastening of the sensing member (300) by screwing onto said nut.

2. A screw actuator according to claim 1, **characterized in that** the sensing member (300) has at its end an enlarged head (340) that emerges from the nut at a space countersunk in the outside surface of said nut and that enables said head (340) to remain below the surface.

3. A screw actuator according to claim 1, **characterized in that** the sensing member (300) is embedded in a rib of the thread (210) of the nut.

4. A screw actuator according to any preceding claim, **characterized in that** the sensing member (300) is placed close to a surface (215) forming the flank (215) of a rib (210) of the thread of the nut (200), so as to come into contact with the thread of the screw (100) in the event of the thread of the nut (200) wearing, contact being made through the flank (215) of the rib (210) of the thread of the nut (200).

5. A screw actuator according to claim 4, **characterized in that** the sensing member (300) occupies a zone of the flank (215) situated substantially halfway up a rib (210) of the thread, in such a manner as to come into contact with the thread of the screw (100) in the event of the thread of the nut (200) wearing through said zone of the flank (215) that is situated at half-height.

6. A screw actuator according to any preceding claim, **characterized in that** the sensing member (300) includes a rigid conductive finger (310) extending through the nut (200) from a zone (215) situated close to the surface of the nut (200) that is liable to become worn, to a zone where it emerges from the nut in such a manner that an electrical connection can be made to the rigid finger (310) where it emerges from the nut (200).

7. A screw actuator according to claims 4 and 6 taken in combination, **characterized in that** the rigid finger (310) extends in a direction such as to approach the flank (215) of the rib (210) in a direction that extends substantially transversely relative to the flank (215).

8. A screw actuator according to claim 6 or claim 7, **characterized in that** the nut (200) is provided with a finger (310) receiving passage (220), which passage (220) is preformed prior to receiving the finger (310), the finger (310) and the passage being fitted with complementary threads (225, 325).

9. A screw actuator according to any preceding claim, **characterized in that** the sensing member (300) is constituted by a conductive element (310) surrounded by an insulating sheath (320) in such a manner that the conductive element (310) comes into electrical contact with the screw (100) only once the insulating sheath (320) has been subjected to sufficient wear against the screw (100).

10. A screw actuator according to the preceding claim, **characterized in that** it includes means for detecting when electrical conduction is established between the conductive element (310) and the screw (100).

11. A screw actuator according to any preceding claim, **characterized in that** it is of the type including a screw, a primary nut transmitting the force of the actuator in normal operation, and a secondary nut (200) that acts to take over the force of the actuator in the event of the primary nut failing, the sensing member being placed in the secondary nut.

## Patentansprüche

1. Hebespindel, die eine Schraube-Mutter-Gruppe (100, 200) einschließt, wobei die Schraube mit einer Fläche (215) im Kontakt mit dem Gewinde der Schraube (100) ausgestattet ist und ein elektrisches Organ (300) aufnimmt, das auf eine mechanische Interaktion mit dem Gewinde der Schraube (100) empfindlich ist, wobei dieses empfindliche Organ (300) in der Schraube (200) in der Nähe der besagten Fläche platziert ist, um mit dem Gewinde der Schraube im Fall des Verschleißes dieser Fläche (215) zu interagieren, wobei das empfindliche Organ (300) eine Sonde ist, die eine externe Hülle (380) aufweist und die in einem vorgeformten Durchgang (220) der Mutter angeordnet ist, **dadurch gekennzeichnet, dass** die äußere Hülle (300) der Sonde ein Gewinde (326) aufweist, das imstande ist, mit einem komplementären Innengewinde (225) zusammenzuarbeiten, das der vorgeformte Durchgang der Mutter aufweist, wobei die Gewinde (225, 325) damit die Fixierung des empfindlichen Organs (300) durch Verschrauben auf der Mutter gewährleistet.

2. Hebespindel nach Anspruch 1, **dadurch gekennzeichnet, dass** das empfindliche Organ (330) durch einen verbreiterten Kopf (340) endet, der aus der Mutter auf Ebene einer Aussparung hervorragt, die in die Außenfläche der Mutter eingearbeitet ist und die dem Kopf (340) erlaubt, dort zurückgesetzt zu bleiben.

3. Hebespindel nach Anspruch 1, **dadurch gekennzeichnet, dass** das empfindliche Organ (300) in einer Rippe des Gewindes (210) der Mutter eingelassen ist.

4. Hebespindel nach einem der vorangehenden Ansprüche, **dadurch gekennzeichnet, dass** das empfindliche Organ (300) in der Nähe einer Fläche (215) platziert ist, die die Seite (215) einer Rippe (210) des Gewindes der Mutter (200) bildet, um im Fall des Verschleißes des Gewindes der Mutter (200) über die Seite (215) der Rippe (210) des Gewindes der Mutter (200) mit dem Gewinde der Schraube (100) in Kontakt zu kommen.

5. Hebespindel nach Anspruch 4, **dadurch gekennzeichnet, dass** das empfindliche Organ (300) einen Bereich der Seite (215) belegt, die sich etwa auf halber Höhe der Rippe (210) des Gewindes befindet, um im Fall des Verschleißes des Gewindes der Mutter (200) über diesen Bereich der auf halber Höhe befindlichen Seite (215) mit dem Gewinde der Schraube in Kontakt zu kommen.

6. Hebespindel nach einem der vorangehenden Ansprüche, **dadurch gekennzeichnet, dass** das empfindliche Organ (300) einen starren leitenden Finger (310) einschließt, der sich ab einem Bereich (215), der sich in der Nähe der möglichen Verschleißfläche der Mutter (200) befindet, bis zu einem Bereich durch die Mutter (200) erstreckt, wo er aus der Mutter derart auftaucht, dass dieser starre Finger (310) durch seinen aus der Mutter (200) auftauchenden Teil elektrisch versorgbar ist.

7. Hebespindel nach den Ansprüchen 4 und 6 in Kombination, **dadurch gekennzeichnet, dass** sich der starre Finger (310) in eine Richtung derart erstreckt, dass er sich der Seite (215) der Rippe (210) in einer etwa transversalen Richtung zu dieser Seite (215) nähert.

8. Hebespindel nach Anspruch 6 oder Anspruch 7, **dadurch gekennzeichnet, dass** die Mutter (200) mit einem Durchgang (220) zur Aufnahme des Fingers (310) ausgestattet ist, wobei der Durchgang (220) vor Aufnahme des Fingers (310) vorgeformt wurde, wobei der Finger (310) und der Durchgang mit komplementären Gewinden (225, 325) ausgestattet sind.

9. Hebespindel nach einem der vorangehenden Ansprüche, **dadurch gekennzeichnet, dass** das empfindliche Organ (300) aus einem leitenden Element (310) besteht, das von einer isolierenden Hülle (320) umgeben ist, so dass das leitende Element (310) nur dann mit der Schraube (100) elektrisch im Kontakt tritt, wenn die isolierende Hülle (320) durch Verschleiß gegen die Schraube (100) ausreichend angegriffen ist.

10. Hebespindel nach vorangehendem Anspruch, **dadurch gekennzeichnet, dass** sie Mittel einschließt, um die Herstellung einer elektrischen Leitung des leitenden Elements (310) mit der Schraube (100) festzustellen.

11. Hebespindel nach einem der vorangehenden Ansprüche, **dadurch gekennzeichnet, dass** sie vom Typ ist, der eine Schraube, eine primäre Mutter, die bei normaler Funktion die Beanspruchung der Spindel überträgt, und eine sekundäre Mutter (200) einschließt, die eingreift, um die Beanspruchung der Spindel aufzunehmen, wenn die primäre Mutter defekt ist, wobei das empfindliche Organ in der sekundären Mutter platziert ist.
